# EUROPEAN PATENT SPECIFICATION

(11) **EP 4 296 114 B1**
(45) Date of publication and mention of the grant of the patent: **09.09.2026**
(21) Application number: 22911525.8
(22) Date of filing: 26.09.2022
(51) Int. Cl.: H01M 50/202, H01M 50/267, B60L 50/64, B60L 53/30, B60L 53/80, B60S 5/06, H02J 7/00, H02J 7/70

(54) **BATTERY CHARGER**
BATTERIELADEGERÄT
CHARGEUR DE BATTERIE

(30) Priority: 24.12.2021 KR 20210187699
(43) Date of publication of application: 27.12.2023
(73) Proprietor: LG Energy Solution, Ltd., Seoul 07335 (KR)
(72) Inventor: UM, Taeki, Daejeon 34122 (KR); KONG, Seungjin, Daejeon 34122 (KR); LEE, Jung Hoon, Daejeon 34122 (KR)
(74) Representative: Goddar, Heinz J.
(86) International application number: PCT/KR2022/014374
(87) International publication number: WO 2023/120886

(56) References cited:
- CN-A- 111 555 406
- JP-A- 2002 354 688
- JP-A- 2005 245 071
- JP-B2- 6 924 165
- KR-U- 970 003 398
- KR-Y1- 200 359 099
- US-A1- 2007 069 688
- US-A1- 2013 153 315
- US-A1- 2020 259 348

## Description

### [TECHNICAL FIELD]

### Cross Citation with Related Application(s)

This application claims the benefit of Korean Patent Application No. 10-2021-0187699 filed on December 24, 2021 with the Korean Intellectual Property Office.

The present disclosure relates to a battery charger, and more particularly to a battery charger that can charge batteries of various sizes.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Meanwhile, the need for secondary batteries used in automobiles, which are middle or large-sized devices, is increasing day by day, but the long charging time of large-capacity batteries becomes an obstacle to popularization. Thus, in recent years, market interest in a BSS (Battery Swapping System), which is a method in which a user visits a charging station or the like and replaces a pre-charged battery instead of directly charging the battery, has increased.

Such battery exchange systems pre-charges a discharged battery using multiple battery chargers to provide a fully charged battery in response to a request of the user. However, since only one size of battery can be charged in the charging slot of a typical battery charger, the battery charger must have multiple slots of different sizes in order to respond to the demand for batteries of various sizes, which causes a problem in that the overall size of the battery charger increases. In addition, if the user's demand according to the size is different, there is a problem that the amount of usage between slots is different and thus, the efficiency is not maximized.

Therefore, in order for the battery exchange system to become established, it is necessary to precede development of a battery charger that can charge batteries having different sizes.

JP 6924165 B2 and JP 2005-245071 A respectively describe a battery charger according to the preamble of independent claim 1.

### [DETAILED DESCRIPTION OF THE INVENTION]

### [Technical Problem]

It is an object of the present disclosure to provide to a battery charger that can charge batteries of various sizes.

However, the technical problem to be solved by embodiments of the present disclosure is not limited to the above-described problems, and can be variously expanded within the scope of the technical idea included in the present disclosure.

### [Technical Solution]

The invention is defined by the appended claims.

According to one embodiment of the present disclosure, there is provided a battery charger which includes a charging space in which an inserted battery is charged and a support space that supports the inserted battery, the battery charger comprising: a seating part on which the battery inserted into the charging space is seated, and a guide part that guides the position of the battery seated on the seating part, wherein the guide part is disposed protrusively in the charging space from the support space, and is movable from the charging space toward the support space by an external force.

The guide part may be disposed at an edge of the cross section of the battery charger.

The inserted battery is disposed in a biased manner so as to come into contact with one vertex on the cross section of the battery charger, and the guide part may be disposed spaced apart from the one vertex.

The guide part includes a guide pin and an elastic body connected with the guide pin, the guide pin is disposed protrusively in the charging space from the support space, when an external force is applied to the guide pin, the guide pin moves toward the support space, and when an external force is removed from the guide pin, the guide pin may move from the support space toward the charging space by a restoration force of the elastic body.

The guide pin may be inserted into the seating part.

The guide part includes a first guide wall and a second guide wall that are disposed adjacent to each other, the first guide wall and the second guide wall are disposed protrusively in the charging space from the support space, and when an external force is applied to at least one of the first guide wall and the second guide wall, at least one of the first guide wall and the second guide wall may move toward the support space by an external force.

The first guide wall or the second guide wall may have an L-shaped structure.

The first guide wall and the second guide wall each includes a wall part, an upper hooking part and a lower hooking part perpendicular to one surface of the wall part and extending in opposite directions from both ends of the wall part, and the first guide wall may be disposed inside the second guide wall.

The wall part may be parallel to the side surface of the battery charger.

The wall part may include two side surfaces, the two side surfaces being respectively parallel to two adjacent side surfaces of the battery charger.

The upper hooking part of the first guide wall and the upper hooking part of the second guide wall may be disposed side by side.

The upper hooking part of the first guide wall and the lower hooking part of the second guide wall are disposed so as to correspond to each other, and when the first guide wall moves toward the support space, the upper hooking part of the first guide wall and the lower hooking part of the second guide wall may come into contact with each other.

According to another embodiment of the present disclosure, there is provided a battery charger for charging a first battery or a second battery having different sizes, the battery charger comprising: a seating part on which the first battery or the second battery inserted into the charging space is seated, and a guide part that guides the position of the first battery or the second battery seated on the seating part, wherein the guide part includes a plurality of guide pins, wherein when the first battery is disposed on the seating part, the guide pin is disposed protrusively in the charging space, and wherein when the second battery is disposed on the seating part, at least one of the guide pins is moved to the outside of the charging space.

According to yet another embodiment of the present disclosure, there is provided a battery charger for charging a first battery or a second battery having different sizes, the battery charger comprising: a seating part on which the first battery or the second battery inserted into the charging space is seated, and a guide part that prevents movement of the first battery or the second battery seated on the seating part, wherein the guide part includes a plurality of guide walls, wherein when the first battery is disposed on the seating part, the guide wall is disposed protrusively in the charging space, and wherein when the second battery is disposed on the seating part, at least one of the guide walls is moved to the outside of the charging space.

### [Advantageous Effects]

According to embodiments, the battery charger of the present disclosure can fully charge the batteries of different sizes, which makes it possible to reduce the size of the battery charger and provide a user with fully charged batteries of various sizes, thereby maximizing space efficiency and user convenience.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing a battery charger according to one embodiment of the present disclosure;
Fig. 2 is a top view of the battery charger of Fig. 1;
Fig. 3 is an exploded perspective view of the battery charger of Fig. 1;
Fig. 4 is a diagram for explaining compatibility of a battery charger according to one embodiment of the present disclosure;
Fig. 5 is another diagram for explaining compatibility of a battery charger according to one embodiment of the present disclosure;
Fig. 6 is an exploded perspective view of a battery charger according to another embodiment of the present disclosure;
Fig. 7 is a diagram showing the battery charger of Fig. 6;
Fig. 8 is a top view of the battery charger of Fig. 6; and
Fig. 9 is a diagram for explaining compatibility of a battery charger according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being disposed "above" or "on" a reference portion means the certain part being disposed above or below the reference portion and does not particularly mean the certain part "above" or "on" toward an opposite direction of gravity. Meanwhile, similarly to the case where it is described as being disposed "on" or "above" another part, the case where it is described as being disposed "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used herein to explain various components, but the components should not be limited by the terms. These terms are only used to distinguish one component from another component.

Hereinafter, a battery charger according to one embodiment of the present disclosure will be described.

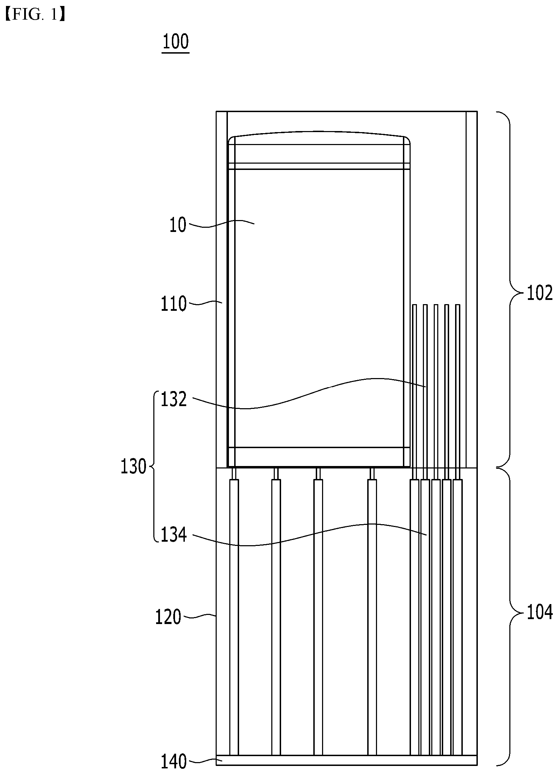

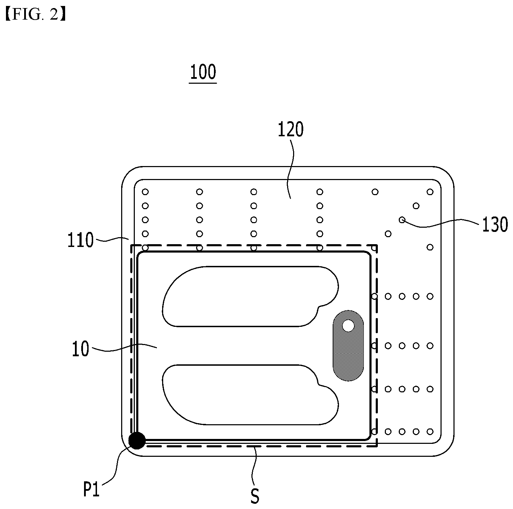

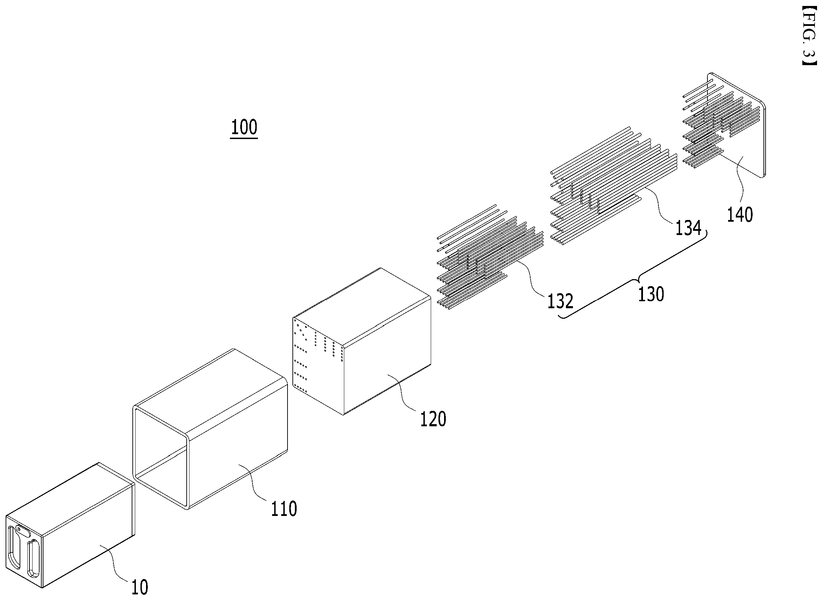

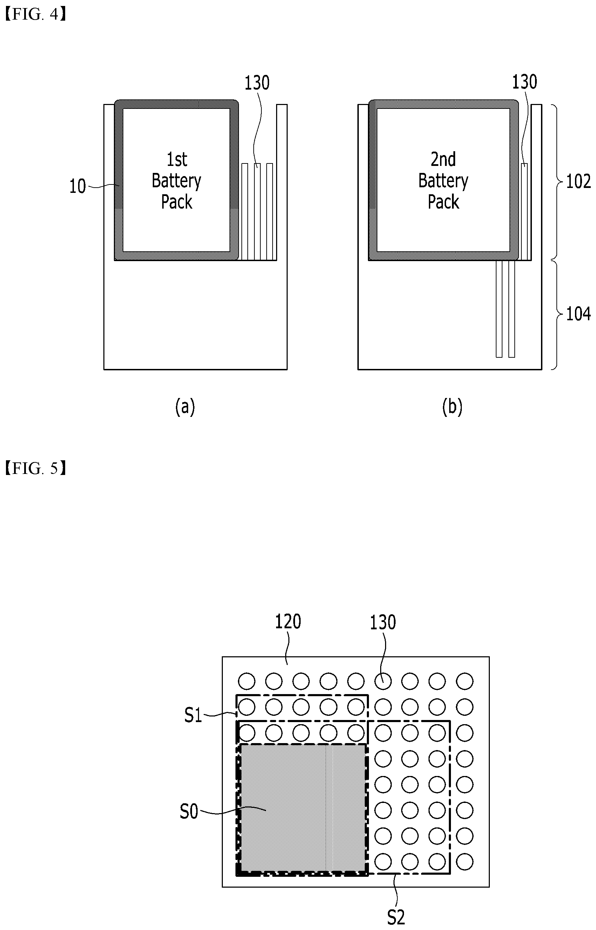

Fig. 1 is a diagram showing a battery charger according to one embodiment of the present disclosure. Fig. 2 is a top view of the battery charger of Fig. 1. Fig. 3 is an exploded perspective view of the battery charger of Fig. 1. Fig. 4 is a diagram for explaining compatibility of a battery charger according to one embodiment of the present disclosure. Fig. 5 is another diagram for explaining compatibility of a battery charger according to one embodiment of the present disclosure.

Referring to Figs. 1 to 3, the battery charger 100 according to one embodiment of the present disclosure may include a charging space 102 and a support space 104. The charging space 102 may be a space that performs charging by inserting a battery 10. The support space 104 may be a space that supports the battery 10 housed in the charging space 102. The support space 104 may be disposed on one side of the charging space 102, and when inserting the battery 10 in the direction of gravity, the support space may be disposed in the direction of gravity of the charging space 102. Further, members disposed in the support space 104 may support one surface of the battery 10, and when inserting the battery 10 in the direction of gravity, they can support the lower surface of the battery 10.

The battery charger 100 of the present embodiment may include a frame 110 forming the contour of the battery charger 100, a seating part 120 on which the battery 10 inserted into the charging space 102 is seated, and a guide part 130 that guides the position of the battery 10 seated on the seating part 120. Also, the battery charger 100 may include a lower plate 140 that forms a lower surface of the battery charger 100. The lower plate 140 is explained herein as a separate component from the frame 110, but the lower plate 140 can be provided as a component included in the frame 110.

The seating part 120 may be disposed in the support space 104. The seating part 120 can support one surface of the battery 10 disposed in the charging space 102. When inserting the battery 10 in the direction of gravity, the seating part 120 can support the battery 10 disposed in the charging space 102 in a direction opposite to gravity. The seating part 120 can support the lower surface of the battery 10. The seating part 120 can come into contact with the lower surface of the battery 10.

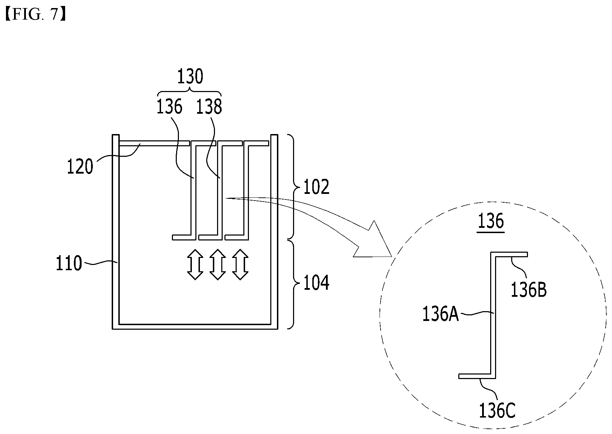

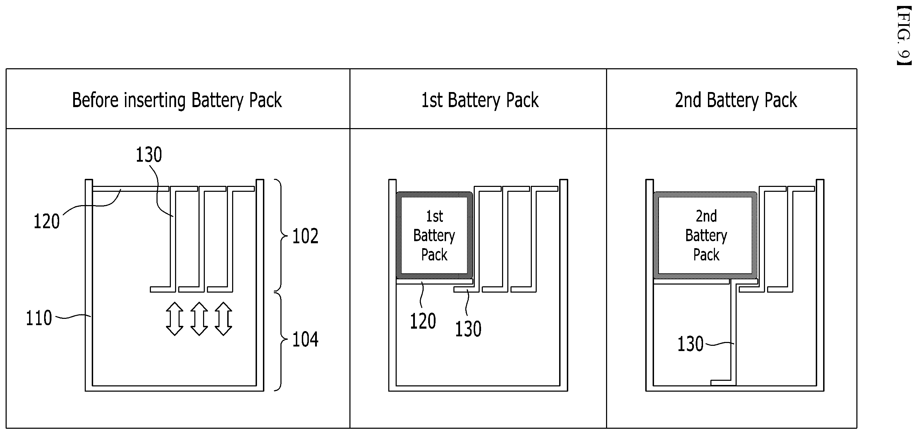

In order to stably support the battery 10, the seating part 120 may be preferably designed so as to be fixed within the support space 104. However, as described later with reference to Figs. 7 and 9, the seating part 120 is disposed on the upper side of the charging space 102 before inserting the battery 10, and the battery 10 is inserted, so that the seating part 120 can move to a lower side by the weight of the battery 10 and can be disposed on the lower side of the charging space 102 or in the support space 104 after inserting the battery 10.

Here, the upper side and the lower side may be based on the insertion direction toward the support space 104 from the charging space 102. More specifically, a direction toward the support space 104 may be the lower side, and a direction toward the charging space 102 may be the upper side. Alternatively, the upper side and the lower side may be based on the height direction of the charging space 102. More specifically, the direction in which a height increases may be the upper side, and the direction in which a height decreases may be the lower side.

The seating part 120 may be disposed within the frame 110. However, as shown in Fig. 1, the frame 110 is provided so as to cover only the charging space 102, and the seating part 120 can also be provided including a frame so as to define the overall contour of the support space 104.

Meanwhile, although not specifically shown in the figure, a charging terminal may be formed on the seating part 120. The charging terminal of the seating part 120 can come into contact with a contact terminal of the battery 10, thereby charging the battery 10. In addition, a substantial charging terminal is formed on the lower plate 140, the contact terminal connected to a charging terminal disposed on the lower plate 140 is formed on the seating part 120, and the contact terminal of the seating part 120 may be designed so as to come into contact with the contact terminal of the battery 10.

The guide part 130 may be for defining the storage space S within the charging space 102. Referring to Fig. 2, the volume of the charging space 102 may be provided larger than the volume of the battery 10, and the storage space S in which the battery 10 is disposed may be smaller than the charging space 102. In the present embodiment, the purpose of forming the charging space 102 to be slightly larger may be for housing both a relatively large-sized battery 10 and a relatively small-sized battery 10. However, in case where the charging space 102 is formed large in this way, if a relatively small-sized battery 10 is inserted into the charging space 102, the gap between the frame 110 and the battery 10 is formed large, so that the battery 10 can be easily separated from a prescribed position, whereby contact between terminals is not formed and thus, charging may not be smooth. However, the battery charger 100 of the present embodiment can allow the battery 10 to be disposed at a prescribed position even when the relatively small-sized battery 10 is inserted into the charging space 102 via the guide part 130.

The guide part 130 may be for guiding the position of the battery 10. The guide part 130 may be disposed on a portion of the cross section of the battery charger 100 or the charging space 102. For example, as shown in Fig. 2, the guide part 130 may be disposed outside the battery charger 100 with reference to the cross section thereof. The guide part 130 may be disposed at an edge on the cross section of the battery charger 100. The guide part 130 may be disposed apart from one vertex P1 on the cross section of the battery charger 100. The guide part 130 may be disposed close to two corners spaced apart from one vertex P1 on the cross section of the battery charger 100. This may be because the battery 10 is disposed in a biased manner so as to come into contact with one vertex P1 or two corners abutting on one vertex P1 on the cross section of the battery charger 100. In this manner, the guide part 130 can guide the position of the battery 10 so that the battery 10 can be disposed in a biased manner toward the side where the one vertex P1 is disposed on the cross section of the battery charger 100.

The guide part 130 may be for preventing the movement of the battery 10 housed in the charging space 102. The guide part 130 may be disposed protrusively in the charging space 102 from the support space 104. After the battery 10 is inserted into the charging space 102, the guide part 130 can protrude at a portion where the battery 10 is not disposed on the cross section of the charging space 102, thereby preventing the battery 10 from being deviated or moved from its initial position. Thus, the guide part 130 can function as a guard or fence and can support the side surface of the battery 10, thereby disposing the battery 10 at a prescribed position.

The guide part 130 may be for changing the storage space S in compliance with the size of the battery 10 housed in the charging space 102. For this purpose, the guide part 130 may be designed movably between the charging space 102 and the support space 104. The guide part 130 may be designed so as to move vertically or move up and down.

Referring to Fig. 4, the guide part 130 may be moved from the charging space 102 to the support space 104 by an external force. The first battery and the second battery shown in Fig. 4 are batteries of different sizes, wherein Fig. 4(a) shows a case where a relatively small-sized first battery is inserted into the charging space 102, and Fig. 4(b) shows a case in which a relatively large-sized second battery is inserted into the charging space 102. Since the guide part 130 exists on a portion of the cross section of the battery charger 100, the guide part 130 may be disposed in a protruded state if a small-sized battery (first battery) is inserted into the charging space 102. However, when a relatively large-sized battery (second battery) is inserted into the charging space 102, the battery 10 may be disposed in an area where the guide part 130 exists, and at least one of the guide parts 130 is moved to the outside of the charging space 102, that is, the support space 104 by the weight of the battery 10, so that the storage space S in which the battery 10 is stored can be provided larger.

The guide part 130 may include an elastic body, and the elastic body can be compressed according to the movement of the guide part 130. When the external force applied to the guide part 130 is removed, the guide part 130 can be moved again from the support space 104 to the charging space 102 by a restoration force of the elastic body, and the guide part 130 may be disposed protrusively in the charging space 102.

More specifically, the guide part 130 may include a guide pin 132 that is disposed protrusively in the charging space 102, and an elastic body 134 connected to the guide pin 132. The number of the guide pins 132 included in the guide part 130 is at least one, and the guide pin 132 may be provided in the shape of a rod.

Meanwhile, as shown in Fig. 3, the guide part 130 cany be provided in the shape inserted into the seating part 120, and the guide pin 132 and the elastic body 134 can be inserted into holes provided in the seating part 120. The elastic body 134 can be provided in the shape of a spring. The elastic body 134 can be provided individually to each guide pin 132. As described above, the guide part 130 can guide the position of the battery 10 via the guide pin 132 and the elastic body 134, and prevent the stored battery 10 from flowing.

The guide pin 132 can change the storage space S in compliance with the size of the stored battery 10. The guide pins 132 may be movable between the charging space 102 and the support space 104. The plurality of guide pins 132 may move individually by an external force. When an external force acts on at least one of the guide pins 132 by the insertion of the battery 10 or the like, the elastic body 134 connected to the guide pin 132 is compressed, so that the guide pin 132 can be moved in the direction in which the external force acts. In this manner, at least one of the guide pins 132 is moved to the outside of the charging space 102 along the storage direction of the battery 10, moved to the support space 104, and disposed thereto, so that the storage space S can be varied.

Referring to Fig. 5, changes in the storage space S according to the size of the battery 10 can be explained. A portion where the guide part 130 is not formed on the cross section of the battery charger 100 may be referred to as a predetermined storage space S0, and the guide part 130 may be disposed outside the predetermined storage space S0. Here, the size of the predetermined storage space S0 may be set in advance so as to correspond to the size of the battery with the large amount of usage or the battery with the largest size. When the battery 10 is inserted into the charging space 102, a portion of the guide part 130 moves in compliance with the size of the battery 10, so that the battery 10 can be disposed in the first storage space S1 or the second storage space S2 that is wider than the predetermined storage space S0. At this time, the guide part 130 disposed outside the first storage space S1 or the second storage space S2 is disposed in a state of protruding into the charging space 102, thereby preventing movement or deviation of the battery 10. In this manner, batteries 10 of various sizes can be charged in the battery charger 100 of the present embodiment as long as the size of the charging space 102 allows, and the contact terminal of the battery 10 can be disposed at a prescribed position where charging terminals or contact terminals are formed in the charging space 102.

Next, a battery charger according to another embodiment of the present disclosure will be described.

The battery charger 100 described below can include all the contents of the battery charger 100 of the above-mentioned embodiment, except for the contents mentioned below. Therefore, the same reference numerals are assigned to the components substantially identical to the above-mentioned embodiment, and detailed descriptions thereof are omitted.

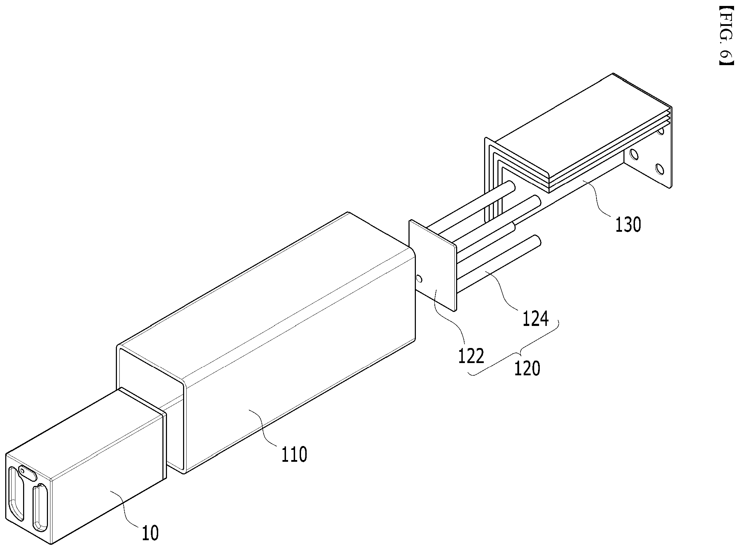

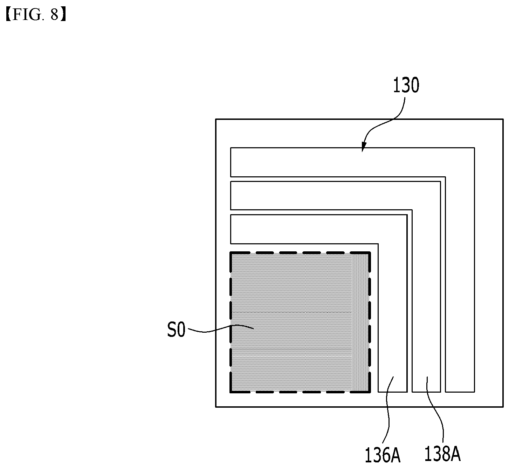

Fig. 6 is an exploded perspective view of a battery charger according to another embodiment of the present disclosure. Fig. 7 is a diagram showing the battery charger of Fig. 6. Fig. 8 is a top view of the battery charger of Fig. 6. Fig. 9 is a diagram for explaining compatibility of a battery charger according to another embodiment of the present disclosure.

Referring to Figs. 6 to 9, the battery charger 100 according to another embodiment of the present disclosure may include a frame 110 forming the contour of the battery charger 100, a seating part 120 on which the battery 10 inserted into the charging space 102 is seated, and a guide part 130 that guides the position of the battery 10 seated on the seating part 120.

The seating part 120 of the present embodiment may be provided in a shape including a support plate 122 and a support base 124, unlike the shape of the seating part 120 of Fig. 1 described above. The battery 10 is seated on the support plate 122 of the seating portion 120, and the support base 124 can support the support plate 122 so that the support plate 122 is disposed at a predetermined distance from the lower surface of the battery charger 100 or a lower plate (not shown in Fig. 6) of the battery charger 100. The support plate 122 may be provided in a plate shape, and the support base 124 may be provided as a column having a polygonal cross section, such as a cylindrical column or a square column.

Meanwhile, in the above-described embodiment, the guide part 130 is provided so as to include a plurality of guide pins 132, but the guide part 130 of the present embodiment may be provided so as to include a plurality of guide walls 136 and 138. The guide part 130 may include guide walls 136 and 138 that are disposed protrusively in the charging space 102 from the support space 104, and the guide part 130 can guide the position of the battery 10 via the guide walls 136 and 138, prevent the stored battery 10 from flowing, and change the size of the storage space S.

The number of guide walls 136 and 138 may be at least two. The guide walls 136 and 138 may include a first guide wall 136 and a second guide wall 138 adjacent thereto. The second guide wall 138 may be disposed outside the first guide wall 136. The second guide wall 138 may be disposed so as to cover an outer surface of the first guide wall 136 as a whole. An inner surface of the second guide wall 138 can correspond to an outer surface of the first guide wall 136. The shape of the guide walls 136 and 138 will be described below, focusing on the first guide wall 136, but it should be noted beforehand that the first guide wall 136 and the second guide wall 138 are similar in shape, and therefore, the description concerning the first guide wall 136 can also be applied to the second guide wall 138.

Referring to Fig. 7, the first guide wall 136 may include a wall part 136A, an upper hooking part 136B that extends from one end of the wall part 136A in a direction perpendicular to one surface of the wall part 136A and a lower hooking part 136C that extends from the other end of the wall part 136A in a direction perpendicular to one surface of the wall part 136A, but extends in the opposite direction to the upper hooking part 136B. Further, although not specifically shown in the figure, the second guide wall 138 may also include a wall part, an upper hooking part, and a lower hooking part.

Referring to Fig. 8, the guide part 130 of the present embodiment may be disposed outside the seating part 120. Based on the cross section of the battery charger 100, the seating part 120 may be disposed in a predetermined storage space S0, and the guide walls 136 and 138 may be disposed outside the predetermined storage space S0. The guide walls 136 and 138 may be disposed outside the battery charger 100 with reference to the cross section thereof. On the cross-section of the battery charger 100, the cross sections of the guide walls 136 and 138 may correspond to two corners spaced apart from one vertex P1.

Meanwhile, here, as shown in Fig. 6, when the lower hooking parts of the guide walls 136 and 138 are formed slightly larger, it may be more accurate to express in the above description that the upper hooking part or the wall part of the guide walls 136 and 138 may be disposed outside the predetermined storage space S0. However, since the overall shape of the guide walls 136 and 138 is influenced by the wall part, it can be interpreted that the shape of the guide walls 136 and 138 is explained through the shape of the wall part.

The guide walls 136 and 138 may have an L-shaped structure. Here, the L-shaped structure may mean that the cross section of the structure has an L-shape with two corners adjacent to one vertex. The vertex of the first guide wall 136 may be disposed so as to come into contact with the vertex of the second guide wall 138. The wall part 136A may have an L-shaped structure, and a cross section of the wall part 136A may have an L shape. The upper hooking part 136B and the lower hooking part 136C may have an L shape.

The wall part 136A may be parallel to the side surface of the battery charger 100 or the frame 110. The wall part 136A may be parallel to the side surface of the battery 10 housed in the charging space 102. One surface of the wall part 136A may be parallel to the insertion direction of the battery 10. Here, the insertion direction may be a direction toward the support space 104 from the charging space 102.

The wall part 136A may include two side surfaces. The two side surfaces of the wall part 136A may be integrally formed so as to share one corner of each other. The two side surfaces of the wall part 136A may be perpendicular to each other. The two side surfaces of the wall part 136A may be respectively parallel to two adjacent side surfaces of the battery charger 100 or the frame 110. The two side surfaces of the wall part 136A may be respectively parallel to two adjacent side surfaces of the battery 10. The two side surfaces of the wall part 136A may respectively cover two adjacent side surfaces of the battery 10. In this manner, the wall parts of the guide walls 136 and 138 are provided in an L-shaped structure with two adjacent side surfaces, so that the guide walls 136 and 138 can cover a large area of the battery 10 and thus, the position of the battery 10 can be guided more easily. Further, the guide walls 136 and 138 can more stably support the side surface of the battery 10, thereby more effectively preventing movement of the battery 10.

Referring to Figs. 7 and 9, the guide walls 136 and 138 may be movable between the charging space 102 and the support space 104. When a relatively large-sized battery is inserted into the charging space 102, at least one of the guide walls 136 and 138 is moved to the outside of the charging space 102, that is, the support space 104 by the weight of the battery 10, and may be disposed thereto. In this manner, as the guide walls 136 and 138 are moved, the storage space S in which the battery 10 is stored can be made larger. For this purpose, the guide part 130 may include an elastic body connected to the guide walls 136 and 138, and when an external force is applied to the guide walls 136 and 138 through the insertion of the battery 10 or the like, the elastic body is compressed and moved in the direction in which the external force acts. When the external force is removed, it can return to its original position through a restoration force of the elastic body.

When a second battery larger in size than the predetermined storage space S0 is inserted into the charging space 102, the second battery can press the upper hooking part 136B of the first guide wall 136, and the first guide wall 136 can move to the support space 104 by the second battery. In this manner, the upper hooking parts 136B and 138B of the guide walls 136 and 138 may be portions that receive an external force by contacting the battery 10 during insertion of the large-sized battery 10. For this purpose, one surface of the upper hooking parts 136B and 138B may be perpendicular to the insertion direction of the battery 10. In addition, the upper hooking parts 136B and 138B may preferably have a slightly large area so that they can easily contact the battery 10, and as shown in Fig. 8, it may be preferable that the upper hooking parts 136B and 138B are disposed side by side. However, when the upper hooking parts 136B and 138B abut on each other, the movement of the guide walls 136 and 138 can be hindered by mutual contact, and thus, it may be desirable to have slight separation so that they do not come into contact with each other.

The first guide wall 136 and the second guide wall 138 may be arranged so that the upper hooking part 136B of the first guide wall 136 and the lower hooking part of the second guide wall 138 correspond to each other. Based on the insertion direction of the battery 10, a lower hooking part of the second guide wall 138 may be disposed on a lower side of the upper hooking part 136B of the first guide wall 136. Accordingly, when the first guide wall 136 is moved by an external force during insertion of the battery 10, the upper hooking part 136B may abut on the lower hooking part of the second guide wall 138. As the first guide wall 136 moves, a hook coupling may be formed between the upper hooking part 136B of the first guide wall 136 and the lower hooking part of the second guide wall 138, which restricts additional movement of the first guide wall 136, and prevents the first guide wall 136 and the second guide wall 138 from separating from each other.

In this manner, the lower hooking parts of the guide walls 136 and 138 may be portions for forming a hook coupling with the upper hooking parts 136B and 138B. The lower hooking part may support the upper hooking parts 136B and 138B moving in the insertion direction of the battery 10 opposite to the insertion direction of the battery 10. For this purpose, one surface of the lower hooking part may be perpendicular to the insertion direction of the battery 10, and may be parallel to one surface of the upper hooking parts 136B and 138B. Here, the upper hooking part 136B of the first guide wall 136 should correspond to the lower hooking part of the second guide wall 138, and for this purpose, the upper hooking part 136B and the lower hooking part 136C may have shapes extending in mutually opposite directions from the wall part 136A of the first guide wall 136. Further, the lower hooking part may preferably have a slightly large area so that it can easily come into contact with the upper hooking parts 136B and 138B.

Meanwhile, the support plate 122 of the seating part 120 described above may be disposed so as to correspond to the lower hooking part 136C of the first guide wall 136. The support plate 122 is disposed on the upper side of the charging space 102 before inserting the battery 10, and may be designed so as to move on the lower side by inserting the battery 10, and the movement of the support plate 122 is restricted by the contact between the support plate 122 and the lower hooking portion 136C of the first guide wall 136, and separation between the guide part 130 and the seating part 120 can be prevented. Meanwhile, when the size of the lower hooking part 136C is formed small, the edges of the lower hooking part 136C and the support plate 122 may correspond to each other, but as shown in Fig. 6, the lower hooking part 136C may be formed large so that the lower hooking part 136C and the support plate 122 correspond to each other as a whole. In such a case, a plurality of holes into which the support base 124 can be inserted may be provided in the lower hooking part 136C, which makes it possible to further prevent separation between the guide part 130 and the seating part 120 in the horizontal direction.

### [Description of Reference Numerals]

10: battery
100: battery charger
102: charging space
104: support space
S: storage space
110: frame
120: seating part
130: guide part
140: lower plate

## Claims

1. A battery charger (100) which includes a charging space (102) in which an inserted battery (10) is charged and a support space (104) that supports the inserted battery (10), the battery charger (100) comprising:
a seating part (120) on which the battery (10) inserted into the charging space (102) is seated, and
a guide part (130) that guides the position of the battery (10) seated on the seating part (120),
**characterized in that** the guide part (130) is disposed protrusively in the charging space (102) from the support space (104), and is movable from the charging space (102) toward the support space (104) by an external force.

2. The battery charger (100) according to claim 1, wherein:
the guide part (130) is disposed at an edge of the cross section of the battery charger (100).

3. The battery charger (100) according to claim 1, wherein:
the inserted battery (10) is disposed in a biased manner so as to come into contact with one vertex (P1) on the cross section of the battery charger (100), and the guide part (130) is disposed spaced apart from the one vertex (P1).

4. The battery charger (100) according to claim 1, wherein:
the guide part (130) comprises a guide pin (132) and an elastic body (134) connected with the guide pin (132),
the guide pin (132) is disposed protrusively in the charging space (102) from the support space (104),
when an external force is applied to the guide pin (132), the guide pin (132) moves toward the support space (104), and
when an external force is removed from the guide pin (132), the guide pin (132) moves from the support space (104) toward the charging space (102) by a restoration force of the elastic body (134).

5. The battery charger (100) according to claim 4, wherein:
the guide pin (132) is inserted into the seating part (120).

6. The battery charger (100) according to claim 1, wherein:
the guide part (130) includes a first guide wall (136) and a second guide wall (138) that are disposed adjacent to each other,
the first guide wall (136) and the second guide wall (138) are disposed protrusively in the charging space (102) from the support space (104), and
when an external force is applied to at least one of the first guide wall (136) and the second guide wall (138), at least one of the first guide wall (136) and the second guide wall (138) moves toward the support space (104) by an external force.

7. The battery charger (100) according to claim 6, wherein:
the first guide wall (136) or the second guide wall (138) has an L-shaped structure.

8. The battery charger (100) according to claim 6, wherein:
the first guide wall (136) and the second guide wall (138) each comprises a wall part (136A, 138A), an upper hooking part (136B, 138B) and a lower hooking part (136C, 138C) perpendicular to one surface of the wall part (136A, 138A) and extending in opposite directions from both ends of the wall part (136A, 138A), and
the first guide wall (136) is disposed inside the second guide wall (138).

9. The battery charger (100) according to claim 8, wherein:
the wall part (136A, 138A) is parallel to the side surface of the battery charger (100).

10. The battery charger (100) according to claim 8, wherein:
the wall part (136A, 138A) comprises two side surfaces, the two side surfaces being respectively parallel to two adjacent side surfaces of the battery charger (100).

11. The battery charger (100) according to claim 8, wherein:
the upper hooking part (136B) of the first guide wall (136) and the upper hooking part (138B) of the second guide wall (138) are disposed side by side.

12. The battery charger (100) according to claim 8, wherein:
the upper hooking part (136B) of the first guide wall (136) and the lower hooking part (138C) of the second guide wall (138) are disposed so as to correspond to each other, and
when the first guide wall (136) moves toward the support space (104), the upper hooking part (136B) of the first guide wall (136) and the lower hooking part (138C) of the second guide wall (138) come into contact with each other.

13. The battery charger (100) according to claim 1 for charging the battery (10), wherein the battery (10) is a first battery or a second battery, and the first battery and the second battery have different sizes,
wherein the guide part (130) includes a plurality of guide pins (132),
wherein when the first battery is disposed on the seating part (120), the guide pins (132) are disposed protrusively in the charging space (102), and
wherein when the second battery is disposed on the seating part (120), at least one of the guide pins (132) is moved to the outside of the charging space (102).

14. The battery charger (100) according to claim 1 for charging the battery (10), wherein the battery (10) is a first battery or a second battery, and the first battery and the second battery have different sizes,
wherein the guide part (130) includes a plurality of guide walls (136, 138),
wherein when the first battery is disposed on the seating part (120), the guide walls (136, 138) are disposed protrusively in the charging space (102), and
when the second battery is disposed on the seating part (120), at least one of the guide walls (136, 138) is moved to the outside of the charging space (102).

## Patentansprüche

1. Batterieladegerät (100), das einen Laderaum (102), in dem eine eingesetzte Batterie (10) geladen wird, und einen Stützraum (104), der die eingesetzte Batterie (10) stützt, aufweist, wobei das Batterieladegerät (100) Folgendes aufweist:
ein Auflageteil (120), auf dem die in den Laderaum (102) eingesetzte Batterie (10) aufliegt, und
ein Führungsteil (130), der die Position der Batterie (10) führt, die auf dem Auflageteil (120) liegt,
**dadurch gekennzeichnet, dass** das Führungsteil (130) von dem Stützraum (104) hervorstehend in dem Laderaum (102) angeordnet ist und durch eine äußere Kraft von dem Laderaum (102) zu dem Stützraum (104) hin bewegbar ist.

2. Batterieladegerät (100) nach Anspruch 1, wobei:
das Führungsteil (130) an einem Rand des Querschnitts des Batterieladegeräts (100) angeordnet ist.

3. Batterieladegerät (100) nach Anspruch 1, wobei:
die eingesetzte Batterie (10) in einer vorgespannten Weise angeordnet ist, um mit einem Scheitelpunkt (P1) auf dem Querschnitt des Batterieladegeräts (100) in Kontakt zu kommen, und das Führungsteil (130) von dem einen Scheitelpunkt (P1) beabstandet angeordnet ist.

4. Batterieladegerät (100) nach Anspruch 1, wobei:
das Führungsteil (130) einen Führungsstift (132) und einen elastischen Körper (134), der mit dem Führungsstift (132) verbunden ist, aufweist,
der Führungsstift (132) von dem Stützraum (104) hervorstehend in dem Laderaum (102) angeordnet ist,
wenn eine äußere Kraft auf den Führungsstift (132) ausgeübt wird, sich der Führungsstift (132) zu dem Stützraum (104) hin bewegt, und
wenn eine äußere Kraft von dem Führungsstift (132) entfernt wird, sich der Führungsstift (132) durch eine Rückstellkraft des elastischen Körpers (134) von dem Stützraum (104) zu dem Laderaum (102) hin bewegt.

5. Batterieladegerät (100) nach Anspruch 4, wobei:
der Führungsstift (132) in das Auflageteil (120) eingesetzt ist.

6. Batterieladegerät (100) nach Anspruch 1, wobei:
das Führungsteil (130) eine erste Führungswand (136) und eine zweite Führungswand (138) aufweist, die benachbart zueinander angeordnet sind,
die erste Führungswand (136) und die zweite Führungswand (138) von dem Stützraum (104) hervorstehend in dem Laderaum (102) angeordnet sind, und
wenn eine äußere Kraft auf die erste Führungswand (136) und/oder die zweite Führungswand (138) ausgeübt wird, sich die erste Führungswand (136) und/oder die zweite Führungswand (138) durch eine äußere Kraft zu dem Stützraum (104) hin bewegt.

7. Batterieladegerät (100) nach Anspruch 6, wobei:
die erste Führungswand (136) oder die zweite Führungswand (138) eine L-förmige Struktur aufweist.

8. Batterieladegerät (100) nach Anspruch 6, wobei:
die erste Führungswand (136) und die zweite Führungswand (138) jeweils ein Wandteil (136A, 138A), ein oberes Hakenteil (136B, 138B) und ein unteres Hakenteil (136C, 138C) senkrecht zu einer Oberfläche des Wandteils (136A, 138A) aufweisen und sich in entgegengesetzte Richtungen von beiden Enden des Wandteils (136A, 138A) erstrecken, und
die erste Führungswand (136) innerhalb der zweiten Führungswand (138) angeordnet ist.

9. Batterieladegerät (100) nach Anspruch 8, wobei:
das Wandteil (136A, 138A) parallel zu der Seitenfläche des Batterieladegeräts (100) ist.

10. Batterieladegerät (100) nach Anspruch 8, wobei:
das Wandteil (136A, 138A) zwei Seitenflächen aufweist, wobei die zwei Seitenflächen jeweils parallel zu zwei benachbarten Seitenflächen des Batterieladegeräts (100) sind.

11. Batterieladegerät (100) nach Anspruch 8, wobei:
das obere Hakenteil (136B) der ersten Führungswand (136) und das obere Hakenteil (138B) der zweiten Führungswand (138) nebeneinander angeordnet sind.

12. Batterieladegerät (100) nach Anspruch 8, wobei:
das obere Hakenteil (136B) der ersten Führungswand (136) und das untere Hakenteil (138C) der zweiten Führungswand (138) so angeordnet sind, dass sie einander entsprechen, und
wenn sich die erste Führungswand (136) zu dem Stützraum (104) hin bewegt, das obere Hakenteil (136B) der ersten Führungswand (136) und das untere Hakenteil (138C) der zweiten Führungswand (138) miteinander in Kontakt kommen.

13. Batterieladegerät (100) nach Anspruch 1 zum Laden der Batterie (10), wobei die Batterie (10) eine erste Batterie oder eine zweite Batterie ist und die erste Batterie und die zweite Batterie unterschiedliche Größen aufweisen,
wobei das Führungsteil (130) mehrere Führungsstifte (132) aufweist,
wobei, wenn die erste Batterie auf dem Auflageteil (120) angeordnet ist, die Führungsstifte (132) hervorstehend in dem Laderaum (102) angeordnet sind, und
wobei, wenn die zweite Batterie auf dem Auflageteil (120) angeordnet ist, mindestens einer der Führungsstifte (132) zu der Außenseite des Laderaums (102) bewegt wird.

14. Batterieladegerät (100) nach Anspruch 1 zum Laden der Batterie (10), wobei die Batterie (10) eine erste Batterie oder eine zweite Batterie ist und die erste Batterie und die zweite Batterie unterschiedliche Größen aufweisen,
wobei das Führungsteil (130) mehrere Führungswände (136, 138) aufweist,
wobei, wenn die erste Batterie auf dem Auflageteil (120) angeordnet ist, die Führungswände (136, 138) hervorstehend in dem Laderaum (102) angeordnet sind, und
wenn die zweite Batterie auf dem Auflageteil (120) angeordnet ist, mindestens eine der Führungswände (136, 138) zu der Außenseite des Laderaums (102) bewegt wird.

## Revendications

1. Chargeur de batterie (100) qui inclut un espace de charge (102) dans lequel une batterie insérée (10) est chargée et un espace de support (104) qui sert de support à la batterie insérée (10), le chargeur de batterie (100) comprenant :
une partie d'assise (120) sur laquelle la batterie (10) insérée dans l'espace de charge (102) est assise, et
une partie de guidage (130) qui guide la position de la batterie (10) assise sur la partie d'assise (120),
**caractérisé en ce que** la partie de guidage (130) est disposée de manière saillante dans l'espace de charge (102) à partir de l'espace de support (104), et peut être déplacée à partir de l'espace de charge (102) vers l'espace de support (104) grâce à une force externe.

2. Chargeur de batterie (100) selon la revendication 1, dans lequel :
la partie de guidage (130) est disposée au niveau d'un bord de la coupe transversale du chargeur de batterie (100).

3. Chargeur de batterie (100) selon la revendication 1, dans lequel :
la batterie insérée (10) est disposée suivant une manière sollicitée de sorte à venir en contact avec un sommet (P1) sur la coupe transversale du chargeur de batterie (100), et la partie de guidage (130) est disposée en espacement par rapport à cet un sommet (P1).

4. Chargeur de batterie (100) selon la revendication 1, dans lequel :
la partie de guidage (130) comprend une broche de guidage (132) et un corps élastique (134) raccordé à la broche de guidage (132),
la broche de guidage (132) est disposée de manière saillante dans l'espace de charge (102) à partir de l'espace de support (104),
lorsqu'une force externe est appliquée à la broche de guidage (132), la broche de guidage (132) se déplace vers l'espace de support (104), et
lorsqu'une force externe est enlevée de la broche de guidage (132), la broche de guidage (132) se déplace à partir de l'espace de support (104) vers l'espace de charge (102) grâce à une force de rappel du corps élastique (134).

5. Chargeur de batterie (100) selon la revendication 4, dans lequel :
la broche de guidage (132) est insérée dans la partie d'assise (120).

6. Chargeur de batterie (100) selon la revendication 1, dans lequel :
la partie de guidage (130) inclut une première paroi de guidage (136) et une deuxième paroi de guidage (138) qui sont disposées en position adjacente l'une à l'autre,
la première paroi de guidage (136) et la deuxième paroi de guidage (138) sont disposées en position saillante dans l'espace de charge (102) à partir de l'espace de support (104), et
lorsqu'une force externe est appliquée à au moins une paroi parmi la première paroi de guidage (136) et la deuxième paroi de guidage (138), au moins une paroi parmi la première paroi de guidage (136) et la deuxième paroi de guidage (138) se déplace vers l'espace de support (104) grâce à une force externe.

7. Chargeur de batterie (100) selon la revendication 6, dans lequel :
la première paroi de guidage (136) ou la deuxième paroi de guidage (138) a une structure en forme de L.

8. Chargeur de batterie (100) selon la revendication 6, dans lequel :
la première paroi de guidage (136) et la deuxième paroi de guidage (138) comprennent chacune une partie de paroi (136A, 138A), une partie d'accrochage supérieure (136B, 138B) et une partie d'accrochage inférieure (136C, 138C) perpendiculaire à une surface de la partie de paroi (136A, 138A) et s'étendant dans des directions opposées à partir des deux extrémités de la partie de paroi (136A, 138A), et
la première paroi de guidage (136) est disposée à l'intérieur de la deuxième paroi de guidage (138).

9. Chargeur de batterie (100) selon la revendication 8, dans lequel :
la partie de paroi (136A, 138A) est parallèle à la surface latérale du chargeur de batterie (100).

10. Chargeur de batterie (100) selon la revendication 8, dans lequel :
la partie de paroi (136A, 138A) comprend deux surfaces latérales, les deux surfaces latérales étant respectivement parallèles à deux surfaces latérales adjacentes du chargeur de batterie (100).

11. Chargeur de batterie (100) selon la revendication 8, dans lequel :
la partie d'accrochage supérieure (136B) de la première paroi de guidage (136) et la partie d'accrochage supérieure (138B) de la deuxième paroi de guidage (138) sont disposées côte à côte.

12. Chargeur de batterie (100) selon la revendication 8, dans lequel :
la partie d'accrochage supérieure (136B) de la première paroi de guidage (136) et la partie d'accrochage inférieure (138C) de la deuxième paroi de guidage (138) sont disposées de sorte à correspondre l'une à l'autre, et
lorsque la première paroi de guidage (136) se déplace vers l'espace de support (104), la partie d'accrochage supérieure (136B) de la première paroi de guidage (136) et la partie d'accrochage inférieure (138C) de la deuxième paroi de guidage (138) viennent en contact l'une avec l'autre.

13. Chargeur de batterie (100) selon la revendication 1 pour charger la batterie (10), dans lequel la batterie (10) est une première batterie ou une deuxième batterie, et la première batterie et la deuxième batterie ont des tailles différentes,
dans lequel la partie de guidage (130) inclut une pluralité de broches de guidage (132),
dans lequel lorsque la première batterie est disposée sur la partie d'assise (120), les broches de guidage (132) sont disposées de manière saillante dans l'espace de charge (102), et
dans lequel lorsque la deuxième batterie est disposée sur la partie d'assise (120), au moins une des broches de guidage (132) est déplacée vers l'extérieur de l'espace de charge (102).

14. Chargeur de batterie (100) selon la revendication 1 pour charger la batterie (10), dans lequel la batterie (10) est une première batterie ou une deuxième batterie, et la première batterie et la deuxième batterie ont des tailles différentes,
dans lequel la partie de guidage (130) inclut une pluralité de parois de guidage (136, 138),
dans lequel lorsque la première batterie est disposée sur la partie d'assise (120), les parois de guidage (136, 138) sont disposées de manière saillante dans l'espace de charge (102), et
lorsque la deuxième batterie est disposée sur la partie d'assise (120), au moins une des parois de guidage (136, 138) est déplacée vers l'extérieur de l'espace de charge (102).
